**Europäisches Patentamt**

**European Patent Office**

**Office européen des brevets**

(19)

(11) Veröffentlichungsnummer: **0 090 460**
**B1**

(12) # EUROPÄISCHE PATENTSCHRIFT

(45) Veröffentlichungstag der Patentschrift:
03.07.85

(51) Int. Cl.⁴: **G 11 B 17/04**

(21) Anmeldenummer: **83200397.4**

(22) Anmeldetag: **23.03.83**

(54) **Plattenspieler.**

(30) Priorität: **27.03.82 DE 3211358**

(43) Veröffentlichungstag der Anmeldung:
**05.10.83 Patentblatt 83/40**

(45) Bekanntmachung des Hinweises auf die Patenterteilung:
**03.07.85 Patentblatt 85/27**

(84) Benannte Vertragsstaaten:
**DE FR GB IT**

(56) Entgegenhaltungen:
**DE - B - 1 278 752**
**FR - A - 2 428 296**
**GB - A - 2 081 487**
**US - A - 3 480 282**

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL-5621 BA Eindhoven (NL)**
(84) Benannte Vertragsstaaten: **FR GB IT**

(72) Erfinder: **Eisemann, Kurt, Moltkestrasse 36,
D-1000 Berlin 45 (DE)**

(74) Vertreter: **Kupfermann, Fritz-Joachim et al, Philips
Patentverwaltung GmbH
Billstrasse 80 Postfach 10 51 49,
D-2000 Hamburg 28 (DE)**

## Beschreibung

Die Erfindung bezieht sich auf einen Plattenspieler für eine starre Informationsträgerplatte mit einem gegenüber einem Gestell drehbar gelagerten Plattenteller, der mittels eines am Gestell angelenkten Deckels verschliessbar ist, mit einem zwischen dem Deckel und einem daran befestigten Schlitten vorgesehenen Aufnahmeschacht für die Platte, wobei der Schlitten derart verschiebbar an dem Deckel angeordnet ist, dass der Schlitten die Platte beim Öffnen des Deckels aus dem Schacht herausschiebt und beim Schliessen des Deckels in die Auflegestellung über den Plattenteller überführt.

Aus der DE-OS 2921410 ist ein Plattenspieler bekannt, mit dem auf einem Plattenteller eine starre Informationsträgerplatte abgespielt werden kann. An dem Deckel des Plattenspielers ist ein Plattenandrücker angeordnet, der mit einem Magnetring federnd auf die Informationsträgerplatte aufsetzbar ist. Beim Schliessen des Gerätedeckels setzt sich der Plattenandrücker auf die Platte auf und drückt die Platte gegen den Plattenteller.

Das Gerät wird von oben her mit Hilfe des Deckels geschlossen, der um eine rückwärtige Gelenkachse schwenkbar am Gestell des Plattenspielers angeordnet ist. Der Deckel wird bei diesem Plattenspieler so weit geöffnet, dass die starre Informationsträgerplatte von Hand auf den Plattenteller aufgelegt werden kann. Der Be- und Entladevorgang setzt dabei voraus, dass die Informationsträgerplatte von Hand zentriert auf den Plattenteller aufgelegt wird und dass sie nach dem Schliessen des Deckels die gewünschte Lage einnimmt. Bei Platten mit relativ grossem Durchmesser ist diese Handhabung durchaus möglich. Bei Platten mt kleinerem Durchmesser, bei denen rascher und bedienungseinfacher gewechselt werden soll, ist dieses Beschicken unbequem.

Aus der DE-PS 1499804 ist ein Gerät bekannt, bei dem sich ein Schlitten zum Aufnehmen eines Informationsträgers beim Öffnen gegenüber dem Deckel ein wenig verschiebt, was zugleich zu einem Verschieben des Informationsträgers führt. Der Verschiebeweg ist dabei aber relativ kurz und zu gering, um eine Platte mit geringem Durchmesser leicht wechseln zu können.

Es ist Aufgabe der Erfindung, einen Plattenspieler der oben genannten Art zu schaffen, bei dem das Wechseln der Informationsträgerplatte praktisch nur das Ergreifen mit einer Hand erfordert.

Die gestellte Aufgabe wird erfindungsgemäss dadurch gelöst, dass eine an das Gestell angelenkte Schwinge schräg gebenüber der Schwenklage des Deckels gelenkig am Schlitten angreift, dass im Bereich des Deckelgelenkes an dem Deckel ein Hebel angeordnet ist und eine Feder das freie Ende des Hebels mit einem Ausleger der Schwinge verbindet.

Auf diese Weise wird ein einfaches Ausschubsystem erhalten, das den Schlitten in Abhängigkeit von der Schwenklage des Deckels mit dem Deckel mitschwingt und gleichzeitig verschiebt. Bei völlig verschwenktem Deckel ist die Platte mit dem Schlitten so weit gegenüber dem Deckelrand verschoben, dass ein Entfernen der Platte leicht durchführbar ist. Weiterhin erfolgt eine stabile Positionierung des Deckels mit dem Schlitten in der geöffneten Lage.

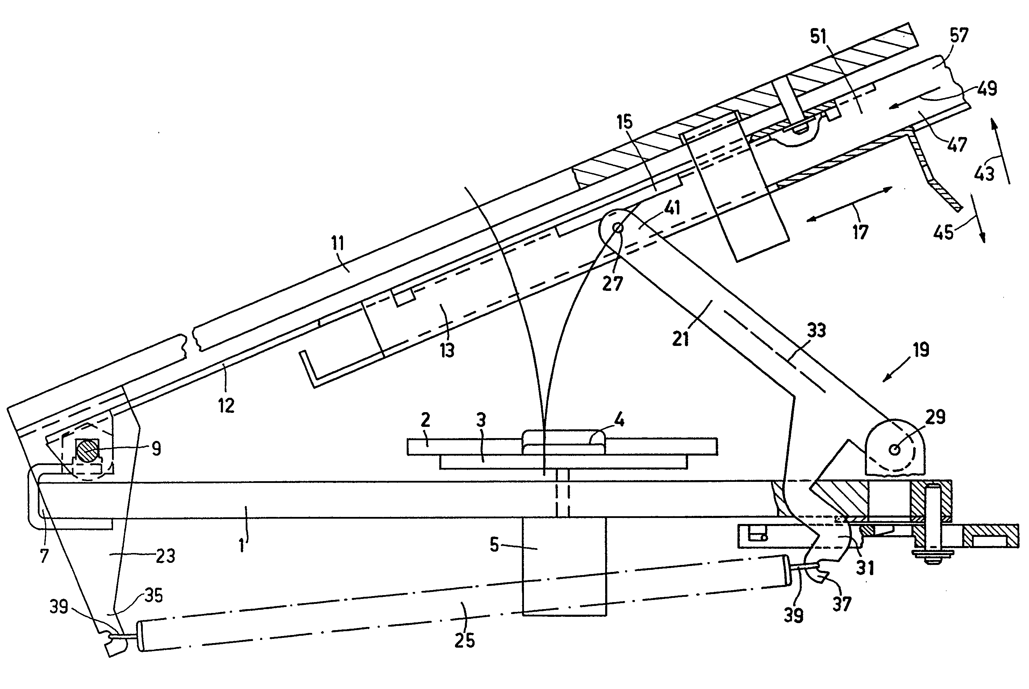

Die Erfindung wird anhand eines in der Zeichnung dargestellten Ausführungsbeispiels näher erläutert.

Die Zeichnung zeigt eine Seitenansicht und einen teilweisen Schnitt durch einen Teil eines Plattenspielers nach der Erfindung.

An dem Gestell 1 eines Plattenspielers zum Abspielen einer starren Informationsträgerplatte 2 ist ein Plattenteller 3 und eine auf schematische Weise dargestellte Plattenzentrierung 4 drehbar gelagert. Der drehbare Plattenteller 3 kann mit Hilfe eines Antriebsmotors 5 angetrieben werden. In der Nähe einer Seite 7 des Gestells 1 ist mittels eines mit dem Gestell verbundenen Gelenkes 9 ein Deckel 11 schwenkbar gelagert. Der Deckel 11 ist zwischen der in der Zeichnung dargestellten Öffnungslage und einer nahezu parallel zu dem Plattenteller 3 liegenden Schliesslage schwenkbar.

An einer mit dem Deckel 11 um das Gelenk 9 mitschwenkenden Trägerplatte 12 ist ein Schlitten 13 verschiebbar angeordnet. Zum Führen dienen Schienen 15 an der Trägerplatte 12. Der Schlitten 13 kann gegenüber dem Deckel 11 in Richtung des Doppelpfeiles 17 verschoben werden.

Zum Verschieben des Schlittens 13 dienen zwei auf beiden Seiten des Gestells 1 liegende Hebelvorrichtungen 19. Die Vorrichtungen 19 bestehen zum einen aus einer Schwinge 21 und zum anderen aus einem Hebel 23. Beide sind mittels einer unter dem Gestell 1 ausgespannten Zugfeder 25 miteinander verbunden. Die Schwinge 21 nimmt in der geöffneten Lage des Deckels eine Schräglage entgegen der Deckelschräglage ein und ist mittels eines Gelenkes 27 am Schlitten 13 und mittels eines weiteren Gelenkes 29 am Gestell 1 angelenkt. Darüber hinaus weist die Schwinge 21 einen Ausleger 31 auf, der sich senkrecht zu der Mittellinie 33 der Schwinge 21 bis unter das Gestell 1 erstreckt.

Der Hebel 23 ist im Bereich des Deckelgelenkes 9 am Deckel 11 befestigt und erstreckt sich von dem Deckel bis unter das Gestell 1. Die freien Enden 35 des Hebels 23 und 37 des Auslegers 31 befinden sich beide unter einer gedachten Linie, die die Gelenke 9 und 29 verbindet. An diesen freien Enden 35 und 37 ist die Zugfeder 25 mit Ösen 39 befestigt.

Die Hebelvorrichtung 19 mit der Schwinge 21 ist auf die obenstehend beschriebene Art und Weise derart ausgebildet, dass ein Endteil 41 der Schwinge 21 bei dem Hochschwenken (Öffnen) des Deckels 11 in Richtung eines Pfeiles 43 über das Gelenk 27 den Schlitten 13 entsprechend dem rechten Pfeil 17 verschiebt, während der Schlitten 13 beim Schliessen des Deckels in Richtung des Pfeiles 45 in entgegengesetzter Richtung verschiebt. Eine Führung in der Nähe der Seitenwände 47 des Schlittens 13 ist derart ausgelegt, dass eine in Richtung eines Pfeiles 49 in einen Schacht 51 zwischen die Trägerplatte 12 und den Schlitten 13 eingeschobene Informationsträgerplatte 2 beim Schliessen des Deckels 11 in Richtung des Pfeiles 45 mit ihrem zentralen Loch genau auf der Zentrierung 4 des Plattentellers 3 zu liegen kommt. Am Öffnungsschlitz 57 des Schachtes 51 kann die Informationsträgerplatte 2 erfasst und ausgewechselt werden, wenn der Deckel 11 sich in der aus der Zeichnung ersichtlichen aufgeschwenkten Lage befindet. Durch die Wahl und die gegenseitige Anordnung der Schwinge 21, des Hebels 23 und der Feder 25 ist in der aufgeschwenkten Lage die Platte 2 so weit gegenüber dem Vorderrand des Deckels 11 verschoben, dass dieses Auswechseln leicht erfolgen kann. Dabei ist es zugleich vorteilhaft, dass in dieser Lage der Deckel 11 gut positioniert liegt.

## Patentansprüche

1. Plattenspieler für eine starre Informationsträgerplatte mit einem gegenüber einem Gestell (1) drehbar gelagerten Plattenteller (3), der mittels eines am Gestell angelenkten Deckels (11) verschliessbar ist, mit einem zwischen dem Deckel und einem daran befestigten Schlitten (13) vorgesehenen Aufnahmeschacht (51) für die Platte, wobei der Schlitten derart verschiebbar an dem Deckel angeordnet ist, dass der Schlitten die Platte beim Öffnen des Deckels aus dem Schacht herausschiebt und beim Schliessen des Deckels in die Auflegestellung über den Plattenteller überführt, dadurch gekennzeichnet, dass eine an das Gestell angelenkte Schwinge (21) schräg gegenüber der Schwenklage des Deckels (11) gelenkig am Schlitten (13) angreift, dass im Bereich des Dekkelgelenkes (9) an dem Deckel (11) ein Hebel (23) angeordnet ist und eine Feder (25) das freie Ende des Hebels (23) mit einem Ausleger (31) der Schwinge (21) verbindet.

2. Plattenspieler nach Anspruch 1, dadurch gekennzeichnet, dass der Ausleger (31) der Schwinge sich in der Längsrichtung nahezu senkrecht zu der Mittellinie (33) der Schwinge (21) bis unter das Gestell (1) erstreckt und dass die freien Enden des Auslegers (31), des Hebels (23) und die Feder (25) unter dem Gestell liegen.

## Claims

1. A disc player for a rigid information-carrying disc, which player comprises a turntable (3) which is rotatably journalled relative to a chassis (1) and which can be closed by means of a lid (11) which is pivotally connected to the chassis, the player comprising a compartment for receiving the disc between the lid and a slide (17) which is connected to the lid, which slide is connected to be movable relative to the lid in such a way that when the lid is opened the slide moves the disc out of the compartment and when the lid is closed the slide brings the disc to the loading position above the turntable, characterized in that an arm (21) which is pivotally connected to the chassis pivotally cooperates with the slide (13), obliquely relative to the pivotal position of the lid (11), a lever (23) is arranged on the lid (11), near the hinge (9) of the lid, and a spring (25) connects the free end of the lever (23) to an extension member (31) of the arm (21).

2. A disc player as claimed in Claim 1, characterized in that the longitudinal direction of the extension member (31) of the arm is substantially perpendicular to the axis (33) of the arm (21) to a point underneath the chassis (1) and the free ends of the extension member (31), the lever (23) and the spring (25) are disposed underneath the chassis.

## Revendications

1. Tourne-disque pour un disque de support d'information rigide comportant un plateau à disque (3) monté à rotation dans un bâti (1), qui peut être fermé au moyen d'un couvercle (11) articulé au bâti, comportant un couloir de réception pour le disque prévu entre le couvercle et un chariot (13) qui y est fixé, le chariot étant monté à coulissement sur le couvercle d'une manière telle que, lors de l'ouverture du couvercle, il fasse glisser le disque hors du couloir et que, lors de la fermeture du couvercle, il assure le transfert du disque dans la position de pose sur le plateau à disque, caractérisé en ce qu'un bras oscillant (21) articulé au bâti s'articule au chariot (13) obliquement par rapport à la position de pivotement du couvercle (1), un levier (23) étant monté sur le couvercle dans la zone de l'articulation (9) du couvercle et un ressort (25) reliant l'extrémité libre du levier (23) à une potence (31) du bras oscillant (21).

2. Tourne-disque suivant la revendication 1, caractérisé en ce que la potence (31) du bras oscillant s'étend dans la direction longitudinale à peu près perpendiculairement à l'axe médian (33) du bras oscillant (21) jusqu'en dessous du bâti (1) et que les extrémités libres de la potence (31), du levier (23) et du ressort (25) sont disposées en dessous du bâti.